Europäisches Patentamt

European Patent Office

Office européen des brevets

(11) Publication number: **0 115 177**
**B1**

## (12) EUROPEAN PATENT SPECIFICATION

(45) Date of publication of patent specification: **27.09.89**

(51) Int. Cl.⁴: **C 04 B 35/65,** C 04 B 35/58

(21) Application number: **83307834.8**

(22) Date of filing: **21.12.83**

(54) Reaction sintered multiphase ceramic body.

(30) Priority: **30.12.82 US 454673**
**30.12.82 US 454674**

(43) Date of publication of application:
**08.08.84 Bulletin 84/32**

(45) Publication of the grant of the patent:
**27.09.89 Bulletin 89/39**

(84) Designated Contracting States:
**BE CH DE FR GB IT LI SE**

(56) References cited:
**CH-A- 488 811**
**GB-A- 901 520**
**GB-A-1 180 323**
**US-A-3 236 663**
**US-A-3 328 280**
**US-A-3 649 310**
**US-A-4 143 413**

**The file contains technical information
submitted after the application was filed and
not included in this specification**

(73) Proprietor: **Corning Glass Works
Houghton Park
Corning New York 14831 (US)**

(72) Inventor: **DeAngelis, Thomas Peter
616 Groff Road
Horseheads New York 14845 (US)**

(74) Representative: **Smith, Sydney et al
Elkington and Fife Beacon House 113 Kingsway
London WC2B 6PP (GB)**

Courier Press, Leamington Spa, England.

# EP 0 115 177 B1

**Description**

The invention relates to ceramic bodies which have one or more of nitride phases of Al and/or Si plus one or more of phases of boride, carbide, silicide and/or sulfide of Groups 3b, 4b, 5b and 6b elements. A combination of the latter compounds can be either two discrete phases (e.g. a boride and a carbide) or a single complex phase (e.g. a borocarbide).

Such materials are of particular interest as regards cells and components thereof employed in the electrolytic production of aluminum from a fused bath, both by electrowinning and electrorefining processes, and the aluminum production processes employing such cells and components.

Most commonly heretofore, these ceramic bodies have been of the type physically formed of ingredients corresponding to the crystalline phases in the ceramic bodies. By way of exemplary illustration, reference is made to the following prior art documents. US—A—3,108,887 discloses hot pressed particulate mixtures of AlN with other compounds, among which are mentioned the compounds MX where M is different from X and is selected from aluminum, boron, silicon, rare earth metals, titanium, zirconium, hafnium, thorium, vanadium, columbium (niobium), tantalum, protactinium, chromium, molybdenum, tungsten and uranium (although no example is given of any of these MX compounds). GB—A—954,272 discloses bodies, either sintered or hot pressed, of particulate mixtures of AlN with a boride of titanium, zirconium, chromium or molybdenum. US—A—3,251,700 and US—A—3,328,280 disclose hot pressed or sintered particulate mixtures of $TiB_2$ and AlN.

Generally those hot pressed or sintered physical mixtures require heating to relatively high temperatures of 1800—2000°C or so. Moreover, such ceramic bodies have properties which are dependent upon and limited by the inherent effects of the physical nature of their ingredients which are physically combined. The distribution and sizing of the phases are generally directly related to the particle sizing and mixing of ingredient powders. The powders are not always easily available in uniformly fine sizes for obtaining homogeneous distribution of phases and superior properties. Milling of powders to improve their sizing can lead to undesirable situations. In fact, some powders such as $TiB_2$ in sizes of about 5 µm or finer present fire and explosion hazard during milling due to their rapid reaction with oxygen in air under conditions of frictional heating.

Amongst numerous reactions for forming other types of multiphase bodies by an unusual reaction hot pressing process involving passage of electric current through the reaction mixture during the process, US—A—3,143,413 discloses reaction hot pressed ceramics with phases of ZrN and either ThS, VaC or ZrC, but no details are given about the properties of such bodies made from −60 mesh reactant powders heated up to 1800—2300°C.

There has been a continuing need for multiphase ceramics with easily controlled and predictable composition, crystal structure (including uniform phase distribution and fine grain size) and related physical properties, and which can be easily and economically fabricated in a variety of shapes by heating at lower temperatures.

Most aluminum is made by the Hall-Heroult process comprising electrolysis of alumina in a molten cryolite bath using carbon anodes and cathodes. The aluminum settles under the cryolite bath on the carbon cathode. However, the aluminum does not wet the carbon cathode and electromagnetic forces in the cell produce waves in and the humping of the molten aluminum. To ensure that the carbon cathode floor of the cell is always completely covered with aluminum, a relatively thick cathode layer, pad or pool of aluminum is maintained, which continues to be subject to waving and humping movement. The latter factor necessitates substantial anode-cathode spacing or gap to avoid shorting between the anode and the moving aluminum cathode pool. It is that spacing or gap that causes considerable electrical energy loss in the resistance heating of the cryolite-aluminum cell bath therein.

Various cell designs of drained cathodes and of cathode pool packing, baffles or weirs have been proposed to alleviate the aluminum movement and energy problem. Also, various aluminum-wettable materials and bodies have been proposed without much success for economically accommodating cell designs that can alleviate those problems. There remains the basic need for cathodes and cathode pool structures of aluminum wettable, durable bodies which can be readily and economically fabricated.

Summary of the invention

This invention substantially overcomes the aforesaid limitations of the prior art and enables the practical attainment of greater technical and economic ease and flexibility by providing ceramic bodies of Al and/or Si nitride and certain boride, carbide, silicide and/or sulfide phases with specially tailored and improved properties as noted herein, and by providing certain components of an electrolytic aluminum production cell, which in use are normally in contact with molten aluminum or in electrical contact with other components which are normally in contact with molten aluminum, with surface and/or inner portions of the components made of reaction sintered multiphase ceramic as defined herein, which is wettable by and durable in molten aluminum and cryolite as well as being electrically conductive. The invention involves not only the new components, but also the cells for and methods of producing aluminum by electrolysis, including both electrowinning and electrorefining aluminum.

The invention is characterized by the discovery of a novel reaction sintered ceramic body and the method of forming it, which body is characterized by uniformly fine-grained and intimately interdispersed

2

phases of certain nitride and other nonoxide compound easily obtained from reactants generally having substantially larger particle sizing than the grain size of the phases in the ceramic body, viz. usually one order of magnitude larger. The reaction hot pressed body of this invention is noted for virtual absence of open porosity, toughness and hardness for wear resistance, corrosion/erosion resistance to molten aluminum and cryolite (with the other nonoxide phase of Groups 4b to 6b metals), low electrical resistivity, thermal shock and oxidation resistance. It is also notable that these valuable properties can be attained by heating and mixture of reactants to temperature not greater than 1650°C and without need for any grain growth inhibitor or sintering aid.

The invention is a reaction sintered multiphase ceramic body or cell component consisting essentially of a fine-grained, homogeneous, intimate interdispersion of:

(a) 5—95 (preferably 45—95) mole percent of nitride phase or phases having a maximum grain size substantially (i.e. at least 95 volume percent) not greater than 10 μm and being nitride of one or both of Al and Si, and

(b) 5—95 (preferably 5—55) mole percent of second phase or phases having a maximum grain size substantially (i.e. at least 95 volume percent) not greater than 10 μm and being boride, carbide, silicide, sulfide or combination thereof of one or more of the elements of Groups 3b including lanthanide and actinide series elements, 4b, 5b and 6b;

which body contains 0 to 4 weight percent oxygen and is prepared by the process comprising:

(c) admixing particulate reactants of maximum particle size substantially (i.e. at least 95 volume percent) not greater than 150 μm and being elements, compounds, intermetallic compounds, alloys or combination thereof in stoichiometric proportions to substantially form the nitride and second phases, and

(d) shaping and heating the admixture to form the reaction sintered body, the heating being done in nonreactive atmosphere and at temperature at which the reaction and sintering occurs between the reactants to substantially from the nitride and second phases.

Reaction sintering involves the dual effects of reaction between and sintering together of the admixed reactants at temperature causing the reaction to occur and be substantially completed. It may be effected at atmospheric, subatmospheric or superatmospheric pressure. The latter condition involves the substantially simultaneous shaping and heating steps of hot pressing to produce a body of the invention with very little or no open porosity and highest strength properties, although some preliminary separate pressing or heating of the reactant admixture may be advantageously done. Where open porosity is desired in an otherwise tough and hard body of the invention, the separate heating step at atmospheric or subatmospheric pressure may be employed sequentially following the shaping step.

Of course, reaction temperature is governed by the particular reactants and their identified reaction temperature at whatever pressure is selected for performing the heating step.

The body of the invention may contain, as part of the nitride and/or second phases, diluent which is a nonreacted portion of the reactant admixture as a stoichiometric excess amount of a reactant and/or as a nitride or second phase according to the aforesaid invention definition but different than the reactants.

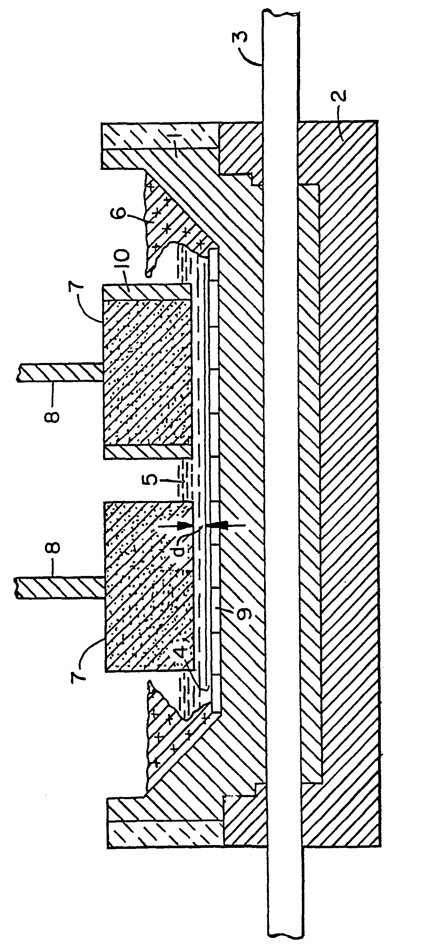

## Brief description of the drawing

The sole figure is a schematic, vertical cross-sectional view of an aluminum electrowinning cell incorporating components comprising the composite body in accordance with the invention.

## Detail description

Part of the invention will be illustrated by reference to one exemplary type of production cell and process, but it is capable of being adapted to other types of electrolytic aluminum production cells and processes, including electrorefining.

The sole figure schematically shows a cell comprising a carbon liner and cathode base 1 in a heat-insulating shell 2 and with a cathode current collector or bar 3 embedded in the liner 1. Within the liner 1 is a shallow or thin cathodic layer or film 4 of molten aluminum and an alumina-containing molten cryolite electrolyte 5 at a temperature of 940—1000°C. This electrolyte commonly consists of sodium cryolite ($Na_3AlF_6$) as the major component plus about 4—10 wt.% calcium fluoride, about 2—10 wt.% aluminum fluoride and about 2—8 wt.% alumina. However, as desired, the electrolyte may be of other alumina-containing compositions. The aluminum layer 4 and molten electrolyte 5 are surrounded by a crust or frozen layer or "freeze" 6 of the solidified electrolyte. Anodes consisting of prebaked blocks of carbon 7, which are suspended by anode current feeders 8, dip into the molten electrolyte 5 above the shallow aluminum layer or film 4, with a spacing d being maintained between the bottom of blocks 7 and the top of the thin layer or film 4. Commonly commercial cells have several rows of pairs of anodes 7. Blocks 7 are generally of the same size in each cell. Such size can range from about 60×40×40 cm for small cells to about 150×100×70 cm for large cells. Operating anode current density is usually between 6 and 10 kA/m².

The carbon cathode base 1 has its upper surface, which faces anode blocks 7, covered by a cathode layer 9 of slabs, segments or plates positioned either closely together or in spaced relation to allow the molten aluminum formed as film 4 on layer 9 to drain continuously off of the top of layer 9 into suitable reservoir or collection basin (not shown). The segments of layer 9 can be either fastened to the carbon base 1 (e.g. by pegs of carbon or the material of layer 9) or merely placed thereon, with mating surfaces providing good electrical contact as needed. These segments of layer 9 (or surface portion thereof) are one of the components desirably formed of reaction sintered multiphase ceramic according to the invention. Such segments, plates or slabs of the reaction sintered ceramic can be about 0.5—5 cm thick e.g. approximately 2.5 cm. They can be of any suitable length, width and geometric shape. For convenience of manufacture and installation, the slabs can be made with length and width dimensions in the range of about 5—15 cm, e.g. about 10 cm, for square or hexagonal shapes.

By using this layer 9 of the ceramic plates of the invention as an operative aluminum-wettable surface in contact with the cathodically collected molten aluminum, layer 4 of such molten aluminum can be easily maintained thin enough to avoid significant waving or humping therein, e.g. as a thin film typically less than about 1 mm or as a shallow layer of desired constant thickness, e.g. up to about 1 cm, if appropriate weirs or restraining means (not shown) are used at edges of layers 9 (which may also be formed of the ceramic according to this invention). In either case, no significant waving or humping occurs in the thin aluminum layer 4 and the distance d can be greatly and reliably minimized, e.g. to about 2—4 cm, to reduce electrical energy loss.

Further electrical energy savings may be achieved when even further portions of cell lining 1 are also constructed of the ceramic components of the invention. Even the cathode current collector 3 (or inner portion thereof) may be formed of those ceramic components.

If carbon anodes 7 are employed, their position with respect to the desired spacing d can be adjusted as the blocks 7 wear away, with computer-controlled anode feed devices maintaining the gap d relatively constant. Alternatively, the carbon anode 7 can be replaced with oxygen-evolving anodes that remain relatively dimensionally stable, in which case the cell may be operated at higher current densities up to $20$—$50$ kA/m$^2$. Optionally these anodes 7 may have a protective and/or reinforcing casing 10, e.g. of alumina, to reduce the rate of wear and loss of carbon blocks 7.

In producing aluminum in the cell shown in the drawing, additional alumina is fed into the electrolyte 5 as it becomes depleted of alumina by its electrolytic reduction to aluminum which settles onto and drains off of layer 9 in conventional manner.

Body or component preparation

It is believed that reaction sintering relies on the reaction having a substantial negative heat of formation as the driving force for the reaction. The products or bodies formed must have lower free energy of formation than the reactants from which they were prepared. The elements of the groups of the Periodic Table as recited in the description of the invention are selected for the invention body so as to conform to these principles.

Reaction sintering is initiated by heating the shaped mixture. At the reaction initiation temperature, the reactants begin to react and liberate a substantial amount of heat. This exotherm causes a sharp temperature rise in the reactant powder mixture. It is believed that this rapid temperature rise permits rapid diffusion of the reactants within the mixture, which causes either hot pressing compaction or sintering shrinkage under atmospheric or subatmospheric pressure as well as further chemical reaction to occur quickly. The reaction initiating temperature is generally much lower than the temperature necessary to attain a dense body by conventional hot pressing or separate pressing and sintering of preformed phase ingredients where no reaction occurs.

Several processing parameters may be adjusted to optimize the conduction of the reaction sintering and the properties of the resultant ceramic body. Some of these parameters are: type, purity and surface area of the particulate reactants; stoichiometry of the reactant mixture; pretreatment of the reactants, rate of heating; magnitude of applied pressure before and/or during heating; post heating treatments; and geometry of the body or product.

Reaction sintering of admixtures according to this invention produces articles or bodies with the nitride and second phases having very small grain size, generally about one order of magnitude smaller than the particle size of the starting reactant powders. The reaction sintered ceramic bodies can be easily prepared with maximum grain sizes of the nitride and second phases being substantially (i.e. at least 95 volume percent) not greater than 5 µm (preferably not greater than 1 µm) or even with mean grain sizes of such phases being substantially (i.e. at least 95 volume percent) not greater than 6 µm (preferably 2 µm). These very fine grain sizes can be attained by using reactants with maximum particle sizes substantially (i.e. at least 95 volume percent) not greater than 44 µm or with mean particle sizes (mps) less than about 25 µm. Grain growth is usually not experienced because the products or bodies can be made at significantly lower temperatures with shorter hold times at heating temperature than by conventional nonreactive manufacturing techniques. Achieving such small grain sizes is often difficult if not impractical to accomplish using conventional nonreactive techniques because either preformed phase powders are not readily available in such small particle size of less than 5 µm for the reasons noted above or irregular grain growth occurs at the higher processing temperatures in the absence of effective grain growth inhibitor.

Generally the particulate reactants are mixed in the stoichiometric proportions to form the desired product phases. For example, the following molar proportion formula describes exemplary reaction mixture and product phases:

$$AlB_2 + TiN \rightarrow TiB_2 + AlN$$

4

However, nonstoichiometric proportions (e.g. of TiN) may be used in order to vary the properties of the product or to control the reaction process. Powdered diluent material may also be added to the reactant mixture. The diluent may be or contain one of the elements of the reactants or may be or contain one of the elements of the reactants or may be the same as one of the reaction-produced phases in the products or may be other suitable material, any of which may be used to control the reaction sintering or properties of the resultant product. The amount of diluent or diluents must be less than that amount which would prevent the reaction sintering from taking place.

The reactants can be mixed or blended in any suitable manner known to those skilled in ceramic technology for yielding an intimate, homogeneous mixture of reactant particles, e.g. by ball milling in dry or wet condition.

For very dense products, the hot pressing procedure, including hot isostatic pressing, is employed. The mixed reactants are charged into a mold. If desired, those reactants may be given pretreatments such as dehydration, degassing or burn-out of binder, provided the pretreatment temperature is kept below the reaction initiation temperature. It is advantageous to precompact the reactant mixture at room temperature and at 50—100% hot pressing pressure to ensure a uniformly compacted product after hot pressing. This was routinely done in making samples of the invention. For common hot pressing with a mold comprising an annular die with upper and lower plungers, the mold for precompaction (and even pretreatment) is preferably the same one used in subsequent hot pressing. The mold can be of any material not adversely reactive with the reaction mixture and that can withstand desired pressures up to 15,000 psi (about 1055 kg/cm$^2$) or more. Graphite molds have been found very suitable for pressure up to 10,000 psi (about 700 kg/cm$^2$) and were exclusively used in making the samples of the invention. At least the precompaction pressure is usually applied to the charged mold and a suitable atmosphere is provided to completely contact the charged mold before heating is begun to effect reaction hot pressing. A moderate vacuum (e.g. about $1 \times 10^{-4}$ Torr) was satisfactorily employed in making the samples of the invention; however, inert gas atmosphere may be employed for the same purpose of protecting the reactants and the mold from adverse air oxidation. As necessary, the pressure is increased to the full load during heating to or at the maximum hot pressing temperature. To assure good body density, full pressure should be at least 2000 psi (about 140 kg/cm$^2$). Heating can be done in any suitable hot pressing furnace, such as an induction heating furnace or electric resistance heating furnace used to make samples of the invention, which provides very rapid heat-up. Heating rates satisfactorily employed ranged between 9 and 25°C/minute, the slower rates being used with reactant mixtures evolving hydrogen that is drawn off by the vacuum system. Heating progresses to a temperature at which the reaction sintering is initiated. That event is marked by a rapid temperature rise in the mold due to exothermic heat evolution from the reaction. When the maximum temperature and pressure for the reaction hot pressing are attained, they are usually held for at least some short period to assure complete reaction sintering, e.g. about 1—2 hours for products ranging between 1.5—4 inches (about 3.8—7.6 cm) in diameter and about 0.2—0.5 inch (about 0.5—1.3 cm) thick as in the cases of the samples made of the invention. Of course, larger plates of greater thickness (e.g. 1 inch or 2.5 cm) may need to be held slightly longer in hot pressing, perhaps up to 5—6 hours. Thereafter, the molds containing the samples are cooled in the furnace under protective atmosphere at furnace cooling rate and the pressure is held on the samples until they were cooled to about room temperature. Then the molds are removed from the furnace and the samples are pressed out of the annular mold body.

For bodies of lesser density, the reactant mixture can be fully compacted or shaped at room temperature generally at pressures up to 60,000 psi (about 4.2 tons/cm$^2$) or more, but preferably between 10—50×10$^3$ psi (about 0.7—3.5 tons/cm$^2$), to yield a green (i.e. unfired) body, which is subsequently sintered at atmospheric pressure. Preforming of the green body can be done by a suitable ceramic fabrication process, e.g. dry or wet pressing, isostatic pressing, slip casting, extrusion, injection molding, doctor blading, etc.

The multiphase ceramic bodies of this invention can be specially designed to have selected useful properties from a variety of choices depending upon their composition and processing. Generally they are very refractory and thermal shock resistant. They are also generally electroconductive. Many have low electrical resistivity and can function as electrodes or electrical conductors in a variety of applications. With resistance to chemical attack, such electrode and conductor applications can be in industrial electrochemical processes including electrolytic metal production (electrowinning and electrorefining) cells, batteries and fuel cells. Some bodies can have adequate electrical resistance to function as electrical resistance elements such as heating elements. Most of them are wear-resistant and hard. They can also exhibit good strength and toughness. Consequently, those bodies can also usefully serve as cutting tool tips, grinding media, high temperature bearings, engine components and other structural parts. In their more porous form, they may serve, for example, as filters for molten metal, as diaphragms or other components of electrolytic metal production cells, or as high surface area or catalytic devices.

The above-described reaction sintered ceramic body, preferably in hot pressed form, can be used for components of an electrolytic aluminum production (electrowinning and electrorefining) cell in contact with the liquid contents thereof when the second phase is or phases are boride, carbide, silicide and/or sulfide of one or more of the elements selected from Groups 4b, 5b and 6b. Especially desirable is the body of diboride of metal selected from Group 4b (particularly titanium) and aluminum nitride.

Bodies A & B

The following two bodies are an exemplary comparison of a reaction hot pressed ceramic body and a conventionally nonreaction hot pressed ceramic body. Both had batch mixtures formulated to give 1:1 molar ratio of $TiB_2$ and AIN phases in those bodies.

Body A of the invention was formed according to the molar formula previously stated. The reactant mixture consisted of 44 wt.% $AlB_2$ of 9.2 µm mps and 56 wt.% TiN of 7.4 µm mps. The $AlB_2$ powder contained 1.9 wt.% oxygen and 0.22 wt.% carbon. The TiN powder contained 0.76 wt.% oxygen and 0.19 wt.% carbon. These reactants were dry mixed without binder in a revolving plastic jar with alumina balls. That mixture was hot pressed in a graphite mold and in a vacuum at a maximum reaction sintering temperature of 1600°C and 4000 psi (281.2 kg/cm²) for 2 hours. This reaction is particularly interesting because TiN was thought to be thermodynamically more stable than $TiB_2$. However, TiN and $AlB_2$ do react to form $TiB_2$ and AIN and that reaction is complete at 1600°C.

Body B not of the invention was formed from a batch mixture consisting of 62.9 wt.% $TiB_2$ of 3.2 µm mps and 37.1 wt.% AIN of 8.8 µm mps. The $TiB_2$ powder contained 0.36 wt.% oxygen and 0.26 wt.% carbon. The AIN powder contained 2.22 wt.% oxygen and 0.17 wt.% carbon. These nonreactive components were wet mixed with trichlorethane in a revolving plastic jar with alumina balls. The nonreactive mixture was hot pressed in the same manner as for Body A except that hot pressing was at 1650°C and 5000 psi.

The comparative properties of Bodies A and B are set forth in Table 1. The lower resistivity values of Body A are believed related to a more uniform interdispersion distribution of small $TiB_2$ grains therein in comparison with the microstructure of Body B, the latter exhibiting larger and more nonuniform grain sizing.

Samples of Body A were tested for suitability for use as a component, e.g. cathode or cathode current collector, in an electrolytic aluminum production cell. In a cathode pool test, a sample of Body A was merely placed submerged (but not connected at the cathode) in the molten aluminum cathode pool of a laboratory test cell operated at about 1000°C for 10 hours with anode and cathode current density of about 0.5 A/cm². In a hanging cathode test, a sample of Body A was suspended and connected as the cathode extending into the representative molten cryolite-aluminum batch of the laboratory test cell operated as noted above. The samples were wetted by aluminum in both tests. The cathode pool test showed only very slight surface erosion and one small surface crack, but otherwise the sample had original sharp edges and surface. No visible corrosion/erosion occurred in the hanging cathode test.

TABLE 1

| | Body A | Body B |
|---|---|---|
| x-ray phases (see Note 1) | TiB$_2$(M)<br>AlN(m)<br>TiN(T) | TiB$_2$(M)<br>AlN(m) |
| O$_2$ wt.% | 1.44 | 1.64 |
| C, wt.% | 0.21 | 0.26 |
| Boride/nitride phases grain size, μm | About 1—2 | About 3.2—8.8 |
| Density, g/cc | 3.83 | 3.0 |
| % of theoretical density | 97.0 | 75.9 |
| Open porosity, % | 0.3 | 18.7 |
| Modulus of rupture<br>@ 20°C, psi×10$^3$<br>(tons/cm$^2$ | 46.5<br>3.27 | 16.9<br>1.19) |
| Thermal shock 20°C air<br>1000°C molten Al<br>→20°C air. | No crack | N.D.<br>(See Note 2) |
| Electrical resistivity,<br>μ Ω-cm in argon:<br>25°C<br>250°C<br>500°C<br>750°C<br>1000°C | 47.0<br>75<br>110<br>140<br>178 | 148<br>N.D.<br>N.D.<br>N.D.<br>N.D. |

Note 1: (M) indicates major phase peaks, (m) indicates minor phase peaks and (T) indicates trace phase peaks.

Note 2: N.D. indicates that property was not determined.

Bodies C and D

These bodies of the invention illustrate the effect on properties by different particle sizing of the reactant powders and demonstrate that generally superior properties are attained with finer particle sizing of those powders. Both of these bodies were made in accordance with the following molar formula:

$$TiN + Al + 2B \rightarrow TiB_2 + AlN$$

from a reaction mixture consisting of 56.02 wt.% TiN powder, 24.45 wt.% Al powder and 19.53 wt.% B powder. The particle sizes of these powders were:

| Powder | Body C | Body D |
|---|---|---|
| TiN | −325 mesh<br>5.2 μm mps | −200+325 mesh<br>47 μm mps |
| Al | −325 mesh<br>22 μm mps | −100+200 mesh<br>80 μm mps |
| B | 5 μm mps | 94 μm mps |

After the usual dry mixing, the reactant mixtures were hot pressed at 1650°C and 5000 psi (351.5 kg/cm$^2$) in vacuum. X-ray analysis of both bodies showed TiB$_2$(M) and AlN(m). The other comparative properties of these two bodies are shown in Table 2.

TABLE 2

| | Body C | Body D |
|---|---|---|
| TiB$_2$/AlN phases grain size, μm | ≤1 | 1—10 (5.5 mean) |
| Al, wt.% | 23.1 | 21.4 |
| Ti, wt.% | 44.6 | 45.2 |
| N, wt.% | 12.3 | 12.3 |
| O, wt.% | 0.79 | 0.82 |
| C, wt.% | 0.25 | 0.15 |
| Density, g/cc | 3.91 | 3.48 |
| Open porosity, % | 0 | 1.6 |
| Modulus of rupture @ 20°C, psi×10$^3$ (tons/cm$^2$ | 47.2 3.32) | N.D. |
| Young's modulus @ 20°C, psi×10$^6$ (tons/cm$^2$×10$^3$ | 61.17 4.300 | 39.35 2.766) |
| Rockwell A hardness | 91 | 74 |
| Electrical resistivity @ 25°C, μ Ω-cm | 48.98 | 72.44 |

Body C exhibited relatively uniform grain size and homogeneous mixture of the phases while Body D showed a large grain size range and somewhat nonhomogeneous phase distribution. However, both of these bodies will be wet by molten aluminum and will be durable in molten aluminum and cryolite. Body C is particularly suitable for functioning as a cathode or cathode pool packing element.

Samples of Body C were formed into two cutting tips of cutting tools with the standard diamond shaped profile and tested in a customary metal cutting test. The test involved a standard procedure of cutting a 2 inch (5.08 cm) diameter bar or workpiece of Viscount 44 high-nickel alloy steel for each test cycle with the experimental cutting tips bonded to a cutting tool base so as to have 0° rake angle and 4° clearance angle from the workpiece. Depth of cut was 0.032 inch (0.81 mm). The workpiece was rotated at 450 rpm to provide a cutting rate of 220 surface feet/minute (5.59 m/min). The lateral feed rate axially along the workpiece was 0.005 inch/revolution (0.127 mm/revolution) and the lateral length of the workpiece cut was 2 inches (5.08 cm). Cutting was done with and without spraying of customary cutting oil lubricant onto the cutting tip at the point of contact with the workpiece. The chips of metal removed from the workpiece during this test were classified as follows, with the best cutting performance being Class 1 and the poorest cutting performance being Class 3:

Class 1—a single long continuous chip.
Class 2—two or more moderately long continuous chips.
Class 3—short segmented or discontinuous chips.

The results of testing the cutting tip samples of Body C in a first cycle of the above-described test were as follows:

| | Sample 1 | Sample 2 |
|---|---|---|
| Lubrication | No | Yes |
| Class of chips | 2 | 1 |
| Tip edge condition | Slight crater | No visible wear |
| Metal build up on tip edge | Slight | None |

Sample 1 satisfactorily performed cutting for 15 cycles before failure, at which time the edge of the tip broke and no longer cut the workpiece.

8

EP 0 115 177 B1

**Body E**

This body of the invention was made according to the molar formula:

$$TiAl+BN+B \rightarrow TiB_2+AlN$$

by dry mixing a reactant mixture consisting of 67.76 wt.% TiAl powder of 33 μm mps, 22.46 wt.% BN powder of 10 μm mps and 9.78 wt.% B powder of 94 μm mps. This mixture was hot pressed in the usual manner at 1600°C and 6000 psi (421.8 kg/cm²). The resultant body had the phases $TiB_2(M)$ and $AlN(m)$, boride and nitride grain sizes of <1 μm, 23.3 wt.% Al, 41.1 wt.% Ti, a density of 3.93 g/cc, 0.1% open porosity, Young's Modulus of $57.6\times10^6$ psi ($4.05\times10^3$ tons/cm²), Rockwell A hardness 90 and electrical resistivity at 25°C of 60.2 μΩ-cm. This body is wettable by molten aluminum and is resistant to corrosion/erosion by molten aluminum and cryolite.

**Body F**

This body of the invention involved the molar formula:

$$3TiSi_2+8BN+TiH_2 \rightarrow 4TiB_2+2Si_3N_4+H_2.$$
$$\text{(reactants)} \qquad \text{(product} \qquad \text{(gas)}$$
$$\text{phases)}$$

The dry-mixed reactant mixture consisted of 55.7 wt.% of $TiSi_2$ powder of −325 mesh, 35.4 wt.% of BN powder of 10 μm mps and 8.9 wt.% $TiH_2$ powder of 2.4 μm mps. After hot pressing in the usual manner at 1600°C and 6000 psi (421.8 kg/cm²), the fabricated body had the phases: $TiB_2(M)$, $Si_3N_4(M)$, BN(T) and $TiSi_2(T)$. Body F also had boride and nitride grain sizes of ≤5 μm, a density of 3.15 g/cc, 12.4% open porosity and Young's Modulus of $21.59\times10^6$ psi ($1.518\times10^3$ tons/cm²), Rockwell A hardness 77.5 and electrical resistivity at 25°C of 1380 μΩ-cm. This body is wettable by molten aluminum and is quite durable in molten aluminum and cryolite.

**Body G**

This body of the invention was generally premised on the molar formula:

$$3TiN+Al_4C_3 \rightarrow 3TiC+3AlN+Al$$

It was made from a dry-mixed reactant mixture consisting of 56.3 wt.% TiN of 7.1 μm mps and 43.7 wt.% $Al_4C_3$ of 13.5 μm mps. After hot pressing in the usual manner at 1600°C and 6000 psi (421.8 kg/cm²), x-ray analysis of the body showed phases of TiC(M), AlN(m) and Al(T). The aluminum metal phase was negligible. The body analytically contained 28.8 wt.% Al and 45.9 wt.% Ti. Properties of the body were: <5 μm carbide and nitride grain sizes, 3.76 g/cc density, 3.5% open porosity, $37.31\times10^6$ psi ($2.623\times10^3$ tons/cm²) Young's Modulus, Rockwell A hardness 84.5 and 295 μΩ-cm electrical resistivity at 25°C.

Other reaction sintered ceramic bodies (with or without hot pressing as desired) can be formed by appropriately selecting other reactant mixtures within the invention definition. The following molar formulas are illustrative of such other selections:

$$AlB_2+LaN+4B \rightarrow AlN+LaB_6$$
$$AlB_2+TaN \rightarrow AlN+TaB_2$$
$$AlB_2+MoN \rightarrow AlN+MoB_2$$
$$4Al+2BN+CrN_2 \rightarrow 4AlN+CrB_2$$
$$Al+C+MoN \rightarrow AlN+MoC$$
$$3SiC+4WN+C \rightarrow Si_3N_4+4WC$$
$$AlSi_2+TiN \rightarrow AlN+TiSi_2$$
$$Al+4Si+Ti_2N \rightarrow AlN+2TiSi_2$$
$$Al+2Si+MoN \rightarrow AlN+MoSi_2$$
$$4LaN+11Si \rightarrow Si_3N_4+4LaSi_2$$
$$4NbN+11Si \rightarrow Si_3N_4+4NbSi_2$$
$$Al_2S_3+2CeN+Ce \rightarrow 2AlN+3CeS$$
$$Al_2S_3+3CeN \rightarrow 2AlN+3CeS+0.5N_2$$
$$Al_2S_3+3CeN+Al \rightarrow 3AlN+3CeS$$
$$Al_2S_3+3TaN+Al \rightarrow 3AlN+3TaS$$
$$2Al_2S_3+2CrN_2+Cr \rightarrow 4AlN+3CrS_2$$
$$8S+3Si+4TiN \rightarrow Si_3N_4+4TiS_2$$

Preferably the reaction sintered multiphase ceramic should contain less than 1 wt.% of oxygen.

**Claims**

1. A reaction sintered multiphase ceramic body characterised in that it consists essentially of a fine-grained, homogeneous, intimate interdispersion of:

9

(a) 5—95 mole percent of nitride phase(s) having a maximum grain size at least 95 volume percent not greater than 10 µm and being nitride of one or both of Al and Si, and

(b) 5—95 mole percent of second phase(s) having a maximum grain size at least 95 volume percent not greater than 10 µm and being boride, carbide, silicide, sulfide or combination thereof of one or more of the elements of Groups 3b (including lanthanide and actinide series elements), 4b, 5b and 6b;

which body contains 0 to 4 weight percent oxygen and is prepared by a process comprising:

(c) admixing particulate reactants of maximum particle size at least 95 volume percent not greater than 150 µm and being elements, compounds, intermetallic compounds, alloys or combination thereof in stoichiometric proportions substantially to form the nitride and second phases, and

(d) shaping and heating the admixture to form the reaction sintered body, the heating being done in non-reactive atmosphere and at temperature at which the reaction and sintering occurs between the reactants substantially to form the nitride and second phases.

2. A body as claimed in claim 1 characterised in that the shaping and heating are substantially simultaneous steps of hot pressing.

3. A body as claimed in claim 1 or claim 2 characterised in that the main grain size of the nitride and second phases is not greater than 6 µm and the mean particle size of the reactants is less than 100 µm.

4. A body as claimed in claim 3 characterised in that the maximum grain size of the nitride and second phases is at least 95 volume percent not greater than 5 µm and the maximum particle size of the reactants is at least 95 volume percent not greater than 44 µm.

5. A body as claimed in claim 4 characterised in that the mean grain size of the nitride and second phases is at least 95 volume percent not greater than 2 µm.

6. A body as claimed in any of claims 1 to 5 characterised in that the second phase(s) is/are boride, carbide, silicide, sulfide or combination thereof of one or more of the elements of Groups 4b, 5b and 6b.

7. A body as claimed in any of claims 1 to 6 characterised in that it contains 45—95 mole percent of the nitride phase(s) and 5—55 mole percent of the second phase(s).

8. A method of forming a body as claimed in claim 1 comprising:

(a) admixing the particulate reactants, and

(b) shaping and heating the admixture to form the reaction sintered body.

**Patentansprüche**

1. Reaktionsgesinterter mehrphasiger Keramikkörper, dadurch gekennzeichnet, daß er im wesentlichen besteht aus einer feinkörnigen, homogenen, innigen Interdispersion aus:

a) 5—95 Molprozent Nitridphase(n) mit einer maximalen Korngröße von wenigstens 95 Volumenprozent von nicht größer als 10 µm, bestehend aus einem Nitrid des Al und/oder Si, und

b) 5—95 Molprozent der zweiten Phase(n) mit einer maximalen Korngröße von wenigstens 95 Volumenprozent von nicht größer als 10 µm, bestehend aus Borid, Karbid, Silizid, Sulfid oder einer Kombination hiervon aus einem oder mehreren der Elemente der Gruppen 3b (einschließlich der Elemente der Lanthaniden- und Aktinidenreihen), 4b, 5b und 6b,

wobei dieser Körper 0—4 Gwichtsprozent Sauerstoff enthält und durch das folgende Verfahren hergestellt worden ist:

c) Beimischen der partikelförmigen Reaktanten mit einer maximalen Partikelgröße von wenigstens 95 Volumenprozent von nicht größer als 150 µm, und bestehend aus Elementen, Verbindungen, intermetallischen Verbindungen, Legierungen oder Kombinationen hiervon in stöchiometrischen Anteilen, um im wesentlichen die Nitrid- und die zweiten Phasen zu bilden, und

d) Gestalten und Erhitzen der Beimischung, um den reaktionsgesinterten Körper zu bilden, wobei das Erhitzen in einer nichtreaktiven Atmosphäre und bei einer Temperatur durchgeführt wird, bei welcher die Reaktion und das Sintern zwischen den Reaktanten stattfindet, um im wesentlichen die Nitrid- und die zweiten Phasen zu bilden.

2. Körper nach Anspruch 1, dadurch gekennzeichnet, daß das Gestalten und Erhitzen im wesentlichen gleichzeitige Schritte des Heißpressens sind.

3. Körper nach Anspruch 1 oder 2, dadurch gekennzeichnet, daß die Hauptkorngröße der Nitrid- und zweiten Phasen nicht größer als 6 µm ist und die mittlere Partikelgröße der Reaktanten weniger als 100 µm beträgt.

4. Körper nach Anspruch 3, dadurch gekennzeichnet, daß die maximale Korngröße der Nitrid- und zweiten Phasen wenigstens 95 Volumenprozent von nicht größer als 5 µm und die maximale Partikelgröße der Reaktanten wenigstens 95 Volumenprozent von nicht größer als 44 µm beträgt.

5. Körper nach Anspruch 4, dadurch gekennzeichnet, daß die mittlere Korngröße der Nitrid- und zweiten Phasen wenigstens 95 Volumenprozent von nicht größer als 2 µm beträgt.

6. Körper nach einem oder mehreren der Ansprüche 1 bis 5, dadurch gekennzeichnet, daß die zweite(n) Phase(n) aus Borid, Karbid, Silizid, Sulfid oder eine Kombination hiervon aus einem oder mehreren der Elemente Gruppe 4b, 5b und 6b besteht bzw. bestehen.

7. Körper nach einem oder mehreren der Ansprüche 1 bis 6, dadurch gekennzeichnet, daß er 45 bis 95 Molprozent der Nitridphase(n) und 5 bis 55 Molprozent der zweiten Phase(n) enthält.

8. Verfahren zur Bildung eines Körpers nach Anspruch 1, bestehend aus

10

# EP 0 115 177 B1

a) Beimischen der partikelförmigen Reaktanten und

b) Gestalten und Erhitzen der Beimischung, um den reaktionsgesinterten Körper zu formen.

## Revendications

1. Un corps céramique polyphasé fritté par réaction, caractérisé en ce qu'il est essentiellement constitué d'une dispersion mutuelle intime, homogène, à grains fins, de:

(a) 5 à 95 moles pour cent d'une ou plusieurs phases de nitrure ayant, pour au moins 95 pour cent de leur volume, une grosseur de grains maximale non supérieure à 10 μm et consistant en nitrure de Al, de Si, ou des deux, et

(b) 5 à 95 moles pour cent d'une ou plusieurs secondes phases ayant, pour au moins 95 pour cent de leur volume, une grosseur de grains maximale non supérieure à 10 μm et consistant en borure, carbure, siliciure, sulfure, ou combinaison d'entre eux, d'un ou plusieurs éléments des Groupes 3b (y compris les éléments des séries des lanthanides et actinides) 4b, 5b et 6b;

ce corps contenant 0 à 4 pour cent en poids d'oxygène et étant fabriqué par un procédé consistant à:

(c) mélanger des substances réactives particulaires ayant, pour au moins 95 pour cent de leur volume, une grosseur de particules maximale non supérieure à 150 μm et consistant en des éléments, composés, composés intermétalliques ou une combinaison d'entre eux, en des proportions stoechiométriques convenant pour former sensiblement la ou les phases de nitrure et la ou les secondes phases, et

(d) façonner et chauffer le mélange pour former le corps fritté par réaction, le chauffage étant effectué dans une atmosphère non réactive et à une température à laquelle se produisent la réaction et le frittage entre les substances réactives de façon à former sensiblement la ou les phases de nitrure et la ou les secondes phases.

2. Un corps tel que revendiqué dans la revendication 1, caractérisé en ce que le façonnage et le chauffage sont des étapes sensiblement simultanées de pressage à chaud.

3. Un corps tel que revendiqué dans la revendication 1 ou la revendication 2, caractérisé en ce que la grosseur de grains principale de la ou des phases de nitrure et de la ou des secondes phases n'est pas supérieure à 6 μm et la grosseur de particules moyenne des substances réactives est inférieure à 100 μm.

4. Un corps tel que revendiqué dans la revendication 3, caractérisé en ce que la grosseur de grains maximale de la ou des phases de nitrure et de la ou des secondes phases est, pour au moins 95 pour cent de leur volume, non supérieure à 5 μm et la grosseur de particules maximale des substances réactives est, pour au moins 95 pour cent de leur volume, non supérieure à 44 μm.

5. Un corps tel que revendiqué dans la revendication 4, caractérisé en ce que la grosseur de grains moyenne de la ou des phases de nitrure et de la ou des secondes phases est, pour au moins 95 pour cent de leur volume, non supérieure à 2 μm.

6. Un corps tel que revendiqué dans l'une quelconque des revendications 1 à 5, caractérisé en ce que la ou les secondes phases consistent en borure, carbure, siliciure, sulfure, ou combinaisons d'entre eux, d'un ou plusieurs des éléments des Groupes 4b, 5b et 6b.

7. Un corps tel que revendiqué dans l'une quelconque des revendications 1 à 6, caractérisé en ce qu'il contient 45 à 95 moles pour cent de la ou des phases de nitrure et 5 à 55 moles pour cent de la ou des secondes phases.

8. Un procédé pour former un corps tel que revendiqué dans la revendication 1, consistant à:

(a) mélanger les substances réactives particulaires, et

(b) façonner et chauffer le mélange pour former le corps fritté par réaction.